# EUROPEAN PATENT APPLICATION

(11) **EP 4 287 589 A1**
(43) Date of publication of application: **06.12.2023**
(21) Application number: 22176098.6
(22) Date of filing: 30.05.2022
(51) Int. Cl.: H04L 67/12, G06F 9/54, H04L 67/56

(54) **METHOD FOR ACCESSING DATA IN AN INDUSTRIAL FACILITY**

(71) Applicant: Siemens Aktiengesellschaft, 80333 München (DE)
(72) Inventor: Eckl, Roland, 91301 Forchheim (DE); Schiekofer, Rainer, 90475 Nürnberg (DE)
(74) Representative: Siemens Patent Attorneys

(57) **Abstract**

Accordingly, the current disclosure describes a method for accessing data via the aggregation server. The method comprises receiving namespace information from a plurality of OPC servers in the industrial facility, generating a one or more partitions based on the received namespace information, and generating a primary address space based on the one or more partitions, the primary address space including a plurality of expanded node identifiers and a primary endpoint.

## Description

### Background

The current disclosure relates to OPC servers in industrial facility and more specifically, relates to OPC UA aggregation servers. OPC UA Aggregation Servers are intended to provide a common view of several (usually subordinate) servers. In this way, the data of all associated devices and systems can be found and retrieved via an endpoint. In addition, the load can be distributed accordingly, since only the aggregation server represents a client with one active connection each compared to the subordinate systems, instead of each potential data consumer opening a separate connection to the device and maintaining subscriptions and the like. In the case of a non-transparent OPC UA Aggregation Server, the data is even stored locally in the Aggregation Server, which can further reduce the load on subordinate devices or at least make the load constant and predictable.

### Description

The current disclosure relates to OPC UA aggregation servers and particularly for management of namespaces.

In OPC UA, companion specifications (succinctly standardized but possibly also proprietary type definitions) and devices or systems (to put it succinctly instance models) are each identified via a string-based namespace. However, since handling long strings adversely affects memory requirements and performance, these namespaces are abbreviated via a simple index. The index corresponds to the entry in the so-called namespace array of each OPC UA server. The nodes in the OPC UA Server are therefore only identified via the namespace index and a locally unique identifier within the respective namespace. However, namespace index is limited in size and in particular the data type for the namespace index on an OPC UA node has been set to Uint16. Thus, it is only possible to address up to a maximum of 65535 namespaces.

This is particularly challenging in the context of aggregation servers. For example, when an aggregation server is used to aggregate over a complete industrial plant with sensors, controllers, pumps, motors (where each device or controller has its own namespace) or even in the cloud over several such systems (enterprise level), it quickly becomes apparent that the number of namespaces for devices and companion specifications can exceed the above mentioned limit. Accordingly, there is a need for a method and a system which addresses the above mentioned issue.

Accordingly, the current disclosure describes a method for accessing data via the aggregation server which addresses the above mentioned issue of limited namespace index. The method comprises receiving namespace information from a plurality of OPC servers in the industrial facility, namespace information from each OPC server from the plurality of OPC servers including at least one uniform resource identifier (URI) associated with at least one namespace of the OPC server and a plurality of node identifiers of a plurality of nodes in the corresponding OPC server, generating a one or more partitions based on the received namespace information, each partition associated with one or more OPC servers and each partition including a corresponding namespace URI associated with the corresponding partition and one or more nodes, each node from the one or more nodes, associated with a corresponding node in a OPC server, and generating a primary address space based on the one or more partitions, the primary address space including a plurality of expanded node identifiers and a primary endpoint, wherein each expanded node identifier is associated with a node in a partition and identifies the corresponding node in the OPC server. An OPC UA Client may convert an expanded node identifier associated with a node in partition into a separate connection, and then read from the actual node in the OPC server via the referenced expanded node identifier, transparently for the user.

Accordingly, via partitions and expanded node identifiers, the current disclosure allows for utilization of namespaces without getting limited by the namespace index. Each partition is capable of accommodating a number of namespaces in accordance with the Uint16 based namespace index. Additionally, the expanded node identifiers (also referred to as ENIDs) are used in the primary address for referencing the subordinate devices and systems (i.e. the nodes) in the servers. This means that instead of the local namespace index, the namespace is still specified as a fully-qualified URI in the form of a string and an endpoint containing the actual node is referenced via a server index. Thus, the primary endpoint reflects the complete address space of the aggregation server but allows reference to the partitions in which the replicated nodes are contained, which can then be read and manipulated within the respective partition. Accordingly, an OPC UA Client is thus able to access data in the plurality of OPC servers via the primary endpoint of the primary address space and may access data of a node in the respective partition.

Additionally, utilization of partitions and expanded node identifiers are compatible with existing OPC standard and therefore, no modification is required on part of the OPC client. This allows for easy utilization with existing clients. Moreover, various services associated with the aggregation server such as cross server search, load distribution, etc.

In an embodiment, generating the one or more partitions including generating an end point associated with each partition from the one or more partitions. An endpoint of a corresponding partition is for accessing the nodes of the corresponding partition. Accordingly, partitions may be accessed via their corresponding end points.

In an embodiment, the method further comprises receiving a query from an OPC client at the primary endpoint. Accordingly, based on the query from the client, the aggregation server can provide the data requested.

In an embodiment, each partition node of a corresponding partition replicates the data of the corresponding node of the OPC server. Accordingly, data structures of the node of the OPC server are also replicated in the partition node and accordingly additional services such as search and analysis service, etc. may be executed on the aggregation server.

In an embodiment, the method comprises determining an exhaustion of a namespace array at the aggregation server prior to generating the one or more partitions. Accordingly, the method is dynamically run when the traditional namespace array is exhausted.

In an embodiment, a first node of a first OPC server includes a functional relationship to a second node of one of the first OPC server and a second OPC server. This relationship is reflected in the partition nodes as well. Accordingly a partition node associated with the first node includes a functional relationship to a partition node associated with the second node. This ensures that functional relationships existing in the OPC servers are also replicated in the partitions.

In an additional aspect, the current disclosure describes an aggregation server for data access in an industrial facility comprising a plurality of OPC servers. The aggregation server comprises one or more processors connected to a memory module. The one or more processors are configured to receive namespace information from a plurality of OPC servers in the industrial facility, wherein namespace information from each OPC server from the plurality of OPC servers includes a uniform resource identifier (URI) associated with a namespace of the OPC server and a plurality of node identifiers of a plurality of nodes in the corresponding OPC server, generate a one or more partitions based on the received namespace information, each partition associated with one or more OPC servers and each partition including a corresponding namespace uniform resource identifier (namespace URI) associated with the corresponding partition and one or more nodes, each node from the one or more nodes, associated with a corresponding node in a OPC server, and generate a primary address space based on the one or more partitions, the primary address space including a plurality of expanded node identifiers and a primary endpoint for accessing information of the plurality of OPC servers, wherein each expanded node identifier is associated with a node in a partition and identifies the corresponding node in the OPC server.

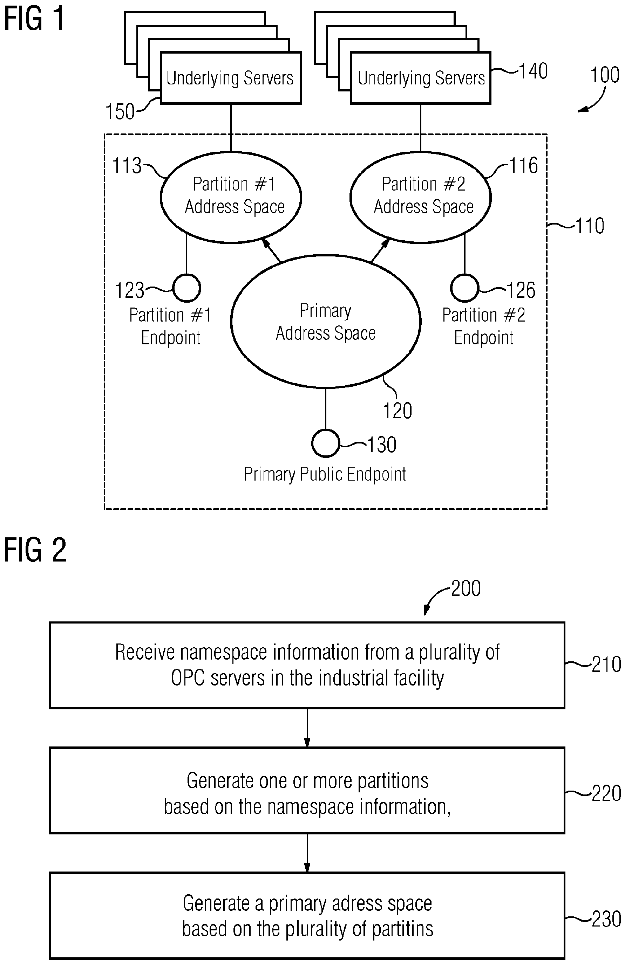

Similarly, in another aspect, the current disclosure describes a non transitory storage medium for data access in an industrial facility comprising a plurality of OPC servers. The non transitory storage medium comprises a plurality of instructions which when executed on one or more processors, cause the one or more processors to receive namespace information from a plurality of OPC servers in the industrial facility, wherein namespace information from each OPC server from the plurality of OPC servers includes a uniform resource identifier (URI) associated with a namespace of the OPC server and a plurality of node identifiers of a plurality of nodes in the corresponding OPC server, generate a one or more partitions based on the received namespace information, each partition associated with one or more OPC servers and each partition including a corresponding namespace uniform resource identifier (namespace URI) associated with the corresponding partition and one or more nodes, each node from the one or more nodes, associated with a corresponding node in a OPC server, and generate a primary address space based on the one or more partitions, the primary address space including a plurality of expanded node identifiers and a primary endpoint for accessing information of the plurality of OPC servers, wherein each expanded node identifier is associated with a node in a partition and identifies the corresponding node in the OPC server. The advantages of the method are applicable to the device and the non transitory storage medium as well. These aspects are further explained in reference to figures 1-3.

Figure 1 illustrates a section 100 of the industrial facility. Industrial facility herein refers to any environment where one or more industrial processes such as manufacturing, refining, smelting, assembly of equipment may take place and includes process plants, oil refineries, automobile factories, warehouses, etc. The industrial facility comprises a plurality of industrial devices and industrial subsystems such as control devices, field devices, operator stations, process historians, etc. Control devices includes process controllers, programmable logic controllers, supervisory controllers, automated guidance vehicles, robots, operator devices, etc. Control devices are connected to a plurality of field devices (not shown in figure) such as actuators and sensor devices for monitoring and controlling industrial processes in the industrial facility. These field devices can include flowmeters, value actuators, temperature sensors, pressure sensors, etc. The control devices may be connected to each other via a control network (realized via wired and wireless networks). Operator stations display the status of the industrial plant to an operator and for allowing the operator to define setpoints for the control of the industrial processes in the facility.

The industrial devices are configured to communicate with each other using OPC UA protocols. Accordingly, one or more devices may be configured to operate as OPC servers (shown in the figure as servers). Additionally, the industrial facility 100 includes an aggregation server connected to OPC servers. OPC UA Aggregation Server provides a common view of the OPC servers, allowing for data of all associated devices and systems to be found and retrieved via an endpoint of the aggregation server. Additionally, the load can be distributed accordingly, since only the aggregation server represents a client with one active connection each compared to the subordinate systems, instead of each potential data consumer opening a separate connection to the device and maintaining subscriptions and the like. In the case of a non-transparent aggregation server, the data is even stored locally in the aggregation server, which can further reduce the load on subordinate devices or at least make the load constant and predictable. Likewise, various value-added services are possible via the aggregation server. Additionally, the aggregation server overcomes the limitations of namespace index using partitions and expanded node identifiers. This is further explained in reference to figure 2.

Figure 2 illustrates a method 200 for accessing data in an industrial facility, by the aggregation server 110.

At step 210, the aggregation server 110 receives namespace information from the plurality of OPC servers (shown in the figure 1 as servers 140, 150) in the industrial facility. Namespace information from each OPC server (140, 150) from the plurality of OPC servers (140, 150) includes a uniform resource identifier (URI) associated with a namespace of the OPC server and a plurality of node identifiers of a plurality of nodes in the corresponding OPC server. The uniform resource identifier associated with the namespace of the OPC server allows for accessing the nodes contained in the namespace, in combination with the node identifier of the node which is to be accessed. It may be noted that there may be a plurality of namespaces in a OPC server and accordingly the namespace information from the OPC server with multiple namespaces includes a plurality of URIS, each URI associated with a corresponding namespace from the plurality of namespaces in the OPC server.

Then, at step 220, the aggregation server 110 generates a one or more partitions (shown in the partition 113, 116) based on the received namespace information. Each partition (113, 116) associated with one or more OPC servers and includes a corresponding namespace URI associated with the corresponding partition. Additionally, each partition includes one or more nodes, each node from the one or more nodes, associated with a corresponding node in a OPC server. Each node of the partition replicates the node of OPC servers associated with it. Accordingly, the data present on the node in the OPC server is replicated on the associated node in the partition. In an example, the nodes of the partition includes a first set of nodes associated with nodes from a first namespace in a OPC server and a second set of nodes associated with nodes from a second namespace in a OPC server.

The aggregation server 110 determines the number of partitions to be generated based on the namespace information received from the OPC servers. In a first example, the number of partitions to be generated is limited by the maximum number of namespaces which may be addressed by a namespace index (also referred to as namespace index limit). Accordingly, when the number of namespaces in the OPC servers is more than the above-mentioned namespace index limit, the server combines one or more namespaces in one partition. This accordingly ensure that the number of resultant partitions is within the namespace index limit.

In an example, in addition to the namespace index limit, the aggregation server considers the relationships between the nodes of the OPC servers, in the generation of the partitions. The aggregation server when generating the nodes of the partition, maps or associates the nodes of the partition with nodes which are related to each other. This ensures that nodes related to each other are within the same partition. For example, a first node of a first OPC server includes a functional relationship to a second node of a second OPC server. Accordingly, when generating the partition, the partition is generated such that a partition node of the partition associated with the first node includes a functional relationship to a partition node of the partition associated with the second node. This accordingly ensures that related nodes are in the same partition.

Then, at step 230, the aggregation server 110 generates a primary address space 120 based on the one or more partitions (113, 116). The primary address space 120 includes a plurality of expanded node identifiers and a primary endpoint 130. Each expanded node identifier (also referred to as ENID) is associated with a node in a partition and identifies the corresponding node in the OPC server. Each expanded node identifier includes full-qualified URI in the form of a string, of a namespace (in which the node identified by the ENID) along with a node identifier (of the node identified by the ENID). Accordingly, expanded node identifier refers to the actual node on the OPC server. Accordingly, ENIDs may be used to access the node on the OPC server. The expanded node identifiers are generated using the URIs received in the namespace information from the OPC servers.

The primary endpoint 130 is for accessing information of the plurality of OPC servers (140, 150) via the aggregation server 100. In addition to the ENIDs and the primary end point 130, the primary address space also includes a local namespace index which refers the partitions (more specifically, the namespaces of the partitions). Accordingly, the namespace index of the primary address space 120 may be used to access the nodes in the partition and expanded node identifiers may be used to access the actual nodes in the OPC servers.

Accordingly, by using the partitions, the above disclosure describes a method in which the namespaces may be managed such that the namespace index may be used without exceeding the limits associated with it. By integration and replicating namespace of the OPC servers in the partitions, the amount of namespaces which may be referred to by the namespace index is reduced (since the number of partitions is less than the number of namespaces of the OPC servers when the number of namespaces in the OPC servers is greater than the namespace index limit). Additionally, by utilizing the expanded node identifiers, it is still possible to refer the actual nodes on the OPC servers.

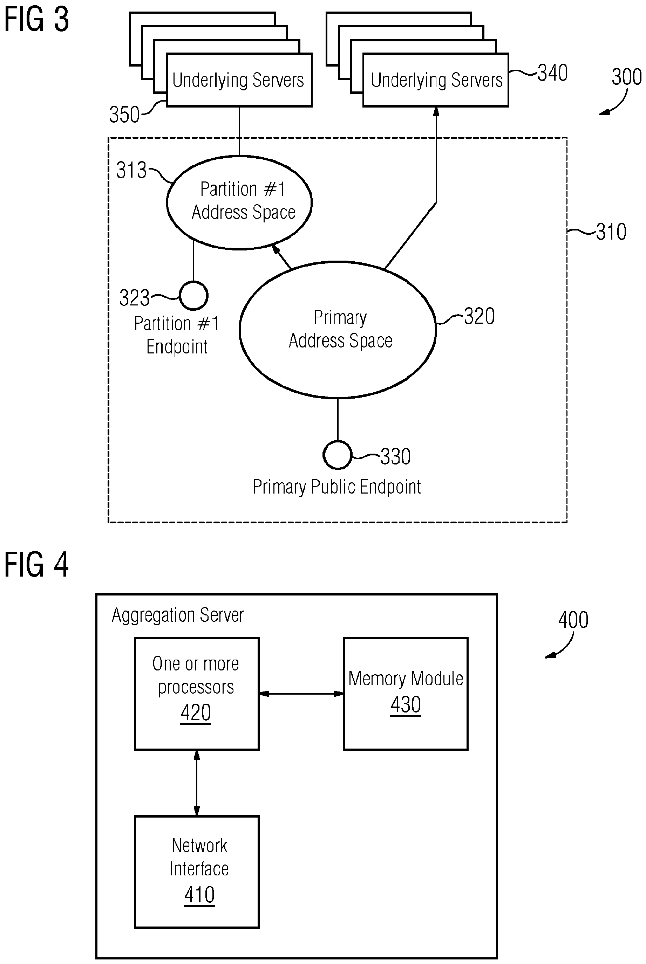

In an embodiment, a hybrid scheme of partitions and OPC servers may be referenced by the primary address space. For example, some OPC servers may be directed referenced by the primary address space while other OPC servers may be mapped onto (is associated) with the partitions and accordingly may be represented by the partitions while also being referenced via ENIDs. For example, if there three namespaces in three OPC servers, the first two namespaces may be used to create the partitions, while the third namespace may not be represented as a partition and is directed referenced via the namespace index of the primary space index. Such a hybrid scheme may be used in dynamic management of the namespace index by the aggregation server. This is further explained in reference to figure 3.

Figure 3 illustrates an aggregation server 310 connected to OPC servers 310 and 340. As described above, the OPC server 310 is duplicated onto the partition 313 using the method 200 described above. Accordingly, the nodes of the namespaces in the OPC server 310 are replicated onto the nodes of the partition 313. Similarly, the primary address space includes a plurality of ENIDs which refer to the nodes of the namespaces in the OPC server 310. Additionally, the primary address space includes a namespace index which references the namespace of the partition 313, particularly the nodes of the partition 313. In addition to the partition 313, the namespace index refers to the namespaces of the OPC server 340, particularly the nodes of the OPC server 340. Accordingly, the hybrid scheme as described above is used. In an example, the method 200 is utilized when the namespace index is close to the namespace index limit. For example when the namespaces of the OPC servers exceeds the namespace index limit, the method 200 is run and the namespaces of the OPC servers are merged into the namespaces of the partition.

It may be noted that while the above mentioned is explained in reference to the aggregation server 110, the above method may be realised using one or more devices or via one or more software modules. Accordingly, the current disclosure describes an aggregation server device (also referred to as aggregation server) which is further described in relation to figure 4.

Figure 4 illustrates an aggregation server device 400 for data access in an industrial facility comprising a plurality of OPC servers. The aggregation server 400 comprises one or more processors 420 connected to a memory module 430. The aggregation server 400 also includes a network interface 410 for communicating with the OPC servers. The memory module 430 (also referred to a non transitory memory module 430) contains a plurality of instructions which may be executed on the one or more processors 420. Upon execution of the instructions, the one or more processors 420 are configured to receive namespace information from a plurality of OPC servers in the industrial facility, wherein namespace information from each OPC server from the plurality of OPC servers includes a uniform resource identifier (URI) associated with a namespace of the OPC server and a plurality of node identifiers of a plurality of nodes in the corresponding OPC server, generate a one or more partitions based on the received namespace information, each partition associated with one or more OPC servers and each partition including a corresponding namespace uniform resource identifier (namespace URI) associated with the corresponding partition and one or more nodes, each node from the one or more nodes, associated with a corresponding node in a OPC server and generate a primary address space based on the one or more partitions, the primary address space including a plurality of expanded node identifiers and a primary endpoint for accessing information of the plurality of OPC servers, wherein each expanded node identifier is associated with a node in a partition and identifies the corresponding node in the OPC server.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments.

In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to device/non transitory storage medium claims.

## Claims

1. A method (200) for accessing data in an industrial facility, by an aggregation server (100), comprising:
a. receiving namespace information from a plurality of OPC servers (140, 150) in the industrial facility, wherein namespace information from each OPC server (140, 150) from the plurality of OPC servers (140, 150) includes at least one URI associated with a namespace of the OPC server and a plurality of node identifiers of a plurality of nodes in the corresponding OPC server;
b. generating one or more partitions (113, 116) based on the received namespace information, each partition (113, 116) associated with one or more OPC servers and each partition including a corresponding namespace URI associated with the corresponding partition and one or more nodes, each node from the one or more nodes, associated with a corresponding node in a OPC server; and
c. generating a primary address space (120) based on the one or more partitions (113, 116), the primary address space (120) including a plurality of expanded node identifiers and a primary endpoint (130), wherein each expanded node identifier is associated with a node in a partition and identifies the corresponding node in the OPC server,
wherein the primary endpoint (130) is for accessing information of the plurality of OPC servers (140, 150) via the aggregation server (100).

2. The method as claimed in claim 1, wherein generating the one or more partitions (113, 116) including generating an end point associated with each partition from the one or more partitions (113, 116), wherein an endpoint of a corresponding partition is for accessing the node identifiers of the corresponding partition.

3. The method as claimed in claim 1, wherein the method (200) further comprises receiving a query from an OPC client at the primary endpoint (130).

4. The method as claimed in claim 1, wherein each partition node of a corresponding partition replicates the data of the corresponding node of the OPC server.

5. The method as claimed in claim 1, wherein the method comprises determining an exhaustion of a namespace array at the aggregation server prior to generating the one or more partitions.

6. The method as claimed in claim 1, wherein a first node of a first OPC server includes a functional relationship to a second node of one of the first OPC server and a second OPC server and wherein a partition node associated with the first node includes a functional relationship to a partition node associated with the second node.

7. An aggregation server (300) for data access in an industrial facility comprising a plurality of OPC servers (140,150), the aggregation server (300) comprising:
a. one or more processors connected to a memory module, the one or more processors configured to:
i. receive namespace information from a plurality of OPC servers (140, 150) in the industrial facility, wherein namespace information from each OPC server (140, 150) from the plurality of OPC servers (140, 150) includes a uniform resource identifier (URI) associated with a namespace of the OPC server and a plurality of node identifiers of a plurality of nodes in the corresponding OPC server;
ii. generate a one or more partitions (113, 116) based on the received namespace information, each partition (113, 116) associated with one or more OPC servers and each partition including a corresponding namespace uniform resource identifier (namespace URI) associated with the corresponding partition and one or more nodes, each node from the one or more nodes, associated with a corresponding node in a OPC server; and
iii. generate a primary address space (120) based on the one or more partitions (113, 116), the primary address space (120) including a plurality of expanded node identifiers and a primary endpoint (130) for accessing information of the plurality of OPC servers (140, 150), wherein each expanded node identifier is associated with a node in a partition and identifies the corresponding node in the OPC server.

8. A non transitory storage medium for data access in an industrial facility comprising a plurality of OPC servers (140,150), the non transitory storage medium comprising a plurality of instructions which when executed on one or more processors, cause the one or more processors to:
a. receive namespace information from a plurality of OPC servers (140, 150) in the industrial facility, wherein namespace information from each OPC server (140, 150) from the plurality of OPC servers (140, 150) includes a uniform resource identifier (URI) associated with a namespace of the OPC server and a plurality of node identifiers of a plurality of nodes in the corresponding OPC server;
b. generate a one or more partitions (113, 116) based on the received namespace information, each partition (113, 116) associated with one or more OPC servers and each partition including a corresponding namespace uniform resource identifier (namespace URI) associated with the corresponding partition and one or more nodes, each node from the one or more nodes, associated with a corresponding node in a OPC server; and
c. generate a primary address space (120) based on the one or more partitions (113, 116), the primary address space (120) including a plurality of expanded node identifiers and a primary endpoint (130) for accessing information of the plurality of OPC servers (140, 150), wherein each expanded node identifier is associated with a node in a partition and identifies the corresponding node in the OPC server.
